# DEMANDE DE BREVET EUROPEEN

(11) **EP 2 361 510 A1**
(43) Date de publication de la demande: **31.08.2011**
(21) Numéro de dépôt: 11155285.7
(22) Date de dépôt: 22.02.2011
(51) Int. Cl.: A23L 1/00, A23L 1/0524, A23L 1/0532, A23L 1/31, A23D 7/005

(54) **Procédé de fabrication de substituts de bardes**

(30) Priorité: 24.02.2010 FR 1051306
(71) Demandeur: Tendriade-Collet, 35220 Chateaubourg (FR)
(72) Inventeur: Ait Hamoudi, Daoud, 35220 Chateaubourg (FR)
(74) Mandataire: Maillet, Alain

(57) **Abrégé**

La présente invention concerne un procédé de fabrication en continu de substituts de bardes, par exemple à partir de matières grasses.

Le procédé de fabrication de substituts de bardes à partir de matières grasses d'origines animales et/ou végétales est caractérisé en ce qu'il comprend les étapes suivantes de:
- préparation d'un mélange comprenant de l'eau (B) et au moins un gélifiant (C) choisi parmi l'alginate et la pectine, avec ou sans matière grasse animale et/ou végétale (A), avec ou sans au moins un autre ingrédient à usage alimentaire (D),
- homogénéisation dudit mélange (2),
- extrusion du mélange en bande (3),
- gélification par mise en contact de la bande avec une solution contenant un agent provoquant la gélification de l'alginate ou de la pectine (4),
- éventuellement découpage (4) de ladite bande à la longueur souhaitée.

## Description

La présente invention concerne un procédé de fabrication de substituts de bardes, par exemple à partir de matières grasses.

En matière culinaire, les bardes sont utilisées afin d'entourer des paupiettes, des préparations bouchères telles que des rôtis, des préparations charcutières cuites telles que des pâtés et entrent parfois également dans la composition des brochettes.

Les bardes naturelles utilisées sont préparées à partir de bardières de porc prélevées sur l'animal et qui sont ensuite découpées aux dimensions requises. Les coûts de telles bardes sont aujourd'hui relativement élevés car les quantités de bardes préparées par les procédés traditionnels sont insuffisantes pour répondre à la demande. De plus, les qualités microbiologiques ne sont pas entièrement satisfaisantes. Enfin, les bardes issues de bardières de porc sont vendues prédécoupées et empilées et nécessitent un travail manuel fastidieux pour les séparer. Ce travail est difficilement automatisable.

Il existe aujourd'hui des procédés permettant de préparer des bardes reconstituées.

Par exemple, il est connu de re-texturer les chutes de gras provenant notamment de l'opération de découpage des bardières de porc naturelles. Un tel procédé est par exemple décrit dans le brevet FR-B1- 2 524 266. Dans ce document, il est proposé d'englober les chutes de gras sous forme de grains très fins dans un gel non thermoréversible. Le gel est formé à l'aide d'un alginate et d'un agent gélifiant de l'alginate, tel que le sulfate de calcium, par moulage et attente de durcissement. Afin que la prise au gel ne soit pas immédiate, c'est-à-dire afin de permettre le moulage, le choix du sulfate de calcium est décrit comme un choix essentiel. Ce dernier permet d'éviter que la gélification soit instantanée. Il est, en outre, conseillé d'incorporer dans le mélange un agent retardant de la gélification qui est, de préférence, un sel de sodium de l'acide pyrophosphorique, tel que le pyrophosphate de sodium. Ce sel a pour but de chélater les ions calcium pour permettre la manipulation du mélange avant que le gel ne commence à se former. L'étape de gélification en moule se déroule sur plusieurs heures. Après démoulage, le produit est découpé.

Il est également connu de jouer sur la température lors de l'étape de moulage afin de favoriser la prise du gel.

Un inconvénient d'un tel procédé est qu'il n'est pas réalisable en continu. En effet, des temps d'attente relativement longs, par exemple supérieurs à 10 minutes, sont nécessaires, tels que le temps d'attente de la gélification et ce procédé nécessite, de plus, une étape de répartition dans un ou plusieurs moules.

Un but de la présente invention est de proposer un procédé de fabrication de substituts de bardes qui ne présente pas les inconvénients susmentionnés. En particulier, le but de la présente invention est de proposer un procédé de fabrication de substituts de bardes réalisable en continu, affranchi de toute étape de moulage et ne nécessitant pas un temps d'attente de durcissement trop long.

A cet effet, l'invention concerne un procédé de fabrication de substituts de bardes qui se caractérise en ce qu'il comprend les étapes suivantes de:
- préparation d'un mélange comprenant de l'eau et au moins un gélifiant choisi parmi l'alginate et la pectine, avec ou sans matière grasse animale et/ou végétale, avec ou sans au moins un autre ingrédient à usage alimentaire,
- homogénéisation dudit mélange,
- extrusion du mélange en bande,
- gélification par mise en contact de la bande avec une solution contenant un agent provoquant la gélification du gélifiant,
- éventuellement, découpe à la longueur souhaitée.

Selon ce procédé, le mélange, après homogénéisation, est dirigé dans une extrudeuse où il est extrudé en une bande qui est alors mise en contact avec une solution contenant un agent gélifiant de l'alginate ou de la pectine. Le procédé se déroule en continu et ne nécessite aucune étape de transfert du mélange dans un moule ou de temps de repos pour permettre la gélification. Ceci signifie de plus que l'étape d'extrusion suit directement l'étape d'homogénéisation du mélange. La gélification de la bande a lieu ensuite instantanément au contact de l'agent provoquant la gélification du gélifiant.

Préférentiellement, le gélifiant est l'alginate.

Préférentiellement encore, l'alginate est sous forme d'alginate de sodium ou de potassium.

Selon un mode de réalisation de l'invention, le mélange comprend de la matière grasse animale et/ou végétale.

Le mélange comprend préférentiellement entre 0 et 40 %, en poids par rapport au poids total du mélange, de matière grasse végétale et/ou animale, plus préférentiellement entre 0 et 30 %.

A titre de matière grasse d'origine animale on citera, par exemple, le gras de porc ou le gras de veau.

A titre de matière grasse d'origine végétale, on citera les huiles végétales sans restriction, notamment l'huile de tournesol.

Avantageusement encore, le mélange comprend entre 0,5 et 6 %, en poids par rapport au poids total du mélange, de gélifiant.

Au mélange de départ, il est possible d'ajouter avantageusement d'autres composants tels que des fibres végétales, des sucres, des émulsifiants, des acidifiants, des arômes, des colorants ou tout autre ingrédient ou additif convenant à un usage alimentaire.

Un mélange de départ possible selon l'invention pour fabriquer une barde selon l'invention est consitué d'eau, de matière grasse végétale et de pectine ou d'alginate. La matière grasse végétale étant constituée d'une huile. Un autre mélange de départ possible pour fabriquer une barde selon l'invention est consitué d'eau, de matière grasse animale et de pectine ou d'alginate. La matière grasse animale étant constituée de gras de porc ou de veau. Selon ces modes de réalisation, aucun autre ingrédient alimentaire n'est nécessaire dans le mélange de départ. Un autre mélange de départ encore possible pour fabriquer une barde selon l'invention est consitué d'eau et de pectine ou d'alginate.

Préférentiellement selon l'invention, l'étape d'homogénéisation est réalisée par cuttérage. L'étape de cuttérage peut être réalisée dans un appareil du type cutter vertical ou horizontal, de marque HOEGER ALPINA ou SEYDELMANN, préalablement réglé pour fonctionner à une vitesse supérieure ou égale à 1000 tours/minute. Le mélange une fois homogénéisé se présente alors sous l'aspect d'une pâte relativement fine.

Suite à l'étape d'homogénéisation, le mélange est extrudé sous vide en bande, préférentiellement d'épaisseur inférieure ou égale à 5 mm, plus préférentiellement inférieure ou égale à 3 mm, encore plus préférentiellement égale à 1,5 mm. Pour ce faire, l'extrusion est réalisée à l'aide d'une extrudeuse, de type poussoir sous vide ou pompe à vitesse de sortie régulière, équipée d'une canule d'extrusion de moins de 3 mm d'épaisseur. A titre d'exemple, un tel dispositif est commercialisé sous la dénomination poussoir sous vide par la société HANDMANN.

La bande ainsi extrudée est alors mise en contact avec une solution contenant un agent provoquant la gélification du gélifiant, c'est-à-dire la gélification de l'alginate ou de la pectine.

La solution contenant cet agent gélifiant de l'alginate ou de la pectine est une solution contenant des ions calcium libres. En présence d'ions calcium, l'alginate ou la pectine se gélifie instantanément. Par exemple, en présence d'ions calcium, l'alginate de sodium ou de potassium gélifie instantanément et prend la forme irréversible d'alginate de calcium. Une solution d'un sel de calcium, tel que le chlorure de calcium ou le lactate de calcium, est préférentiellement choisie.

Avantageusement, la solution contient entre 1 et 15 % du sel de calcium, plus préférentiellement entre 1 et 10%, préférentiellement 5%, en poids.

Selon une caractéristique du procédé selon l'invention, aucun agent chélatant d'ions calcium n'est nécessaire.

Préférentiellement, l'étape de gélification de la bande extrudée se déroule en continu par trempage de la bande extrudée dans un bain contenant la solution de l'agent provoquant le gélifiant de l'alginate ou de la pectine.

Dans une variante de l'invention, la solution de cet agent gélifiant peut être douchée ou pulvérisée sur la bande.

Selon un mode de réalisation de l'invention, le procédé comprend une étape de découpe de la bande à la longueur souhaitée, après l'étape de gélification.

Il est important de noter que le procédé ne peut pas se dérouler de manière satisfaisante si l'étape d'extrusion en bande est substituée par une étape de moulage. En effet, dans les procédés connus utilisant de telles étapes de moulage, le substitut de barde démoulé se présente généralement sous la forme d'un bloc de pâte, ou d'un pain, relativement épais, qui est ensuite débité en fines tranches longitudinalement. Si un tel bloc moulé était, dans le procédé selon l'invention, immergé dans la solution contenant l'agent provoquant la gélification du gélifiant, la gélification ne pourrait être réalisée à coeur. En effet, les ions calcium ne pourraient pas pénétrer suffisamment profondément la pâte et en atteindre le coeur.

La présente invention concerne encore l'utilisation d'un substitut de barde obtenu par un procédé tel que décrit précédemment pour la fabrication d'une préparation bouchère ou charcutière, telle qu'une paupiette.

La présente invention concerne encore un procédé de fabrication d'une préparation bouchère ou charcutière comprenant un substitut de barde qui se caractérise en ce qu'il comprend les étapes suivantes de:
- élaboration d'une préparation bouchère ou charcutière,
- fabrication d'un substitut de barde selon le procédé tel que décrit précédemment,
- assemblage dudit substitut de barde obtenu et de ladite préparation bouchère ou charcutière,
- éventuellement, ficelage de la préparation bouchère ou charcutière.

L'étape d'élaboration d'une préparation bouchère ou charcutière consiste en une étape bien connue de préparation de la viande ou de la charcuterie devant être enveloppée partiellement ou totalement, ou simplement associée, à un substitut de barde selon l'invention.

La présente invention concerne enfin un substitut de barde susceptible d'être obtenu par un procédé tel que décrit précédemment.

Le substitut de barde ainsi obtenu se caractérise, de plus, en ce qu'il présente un film d'alginate, ou de pectine, gélifié sur la totalité de ses faces.

Avantageusement, le substitut de barde contient des fibres. Le substitut de barde obtenu présente la caractéristique avantageuse d'être résistant à un ficelage manuel ou mécanique, du type réalisé par la ficeleuse distribuée par la société BIRO.

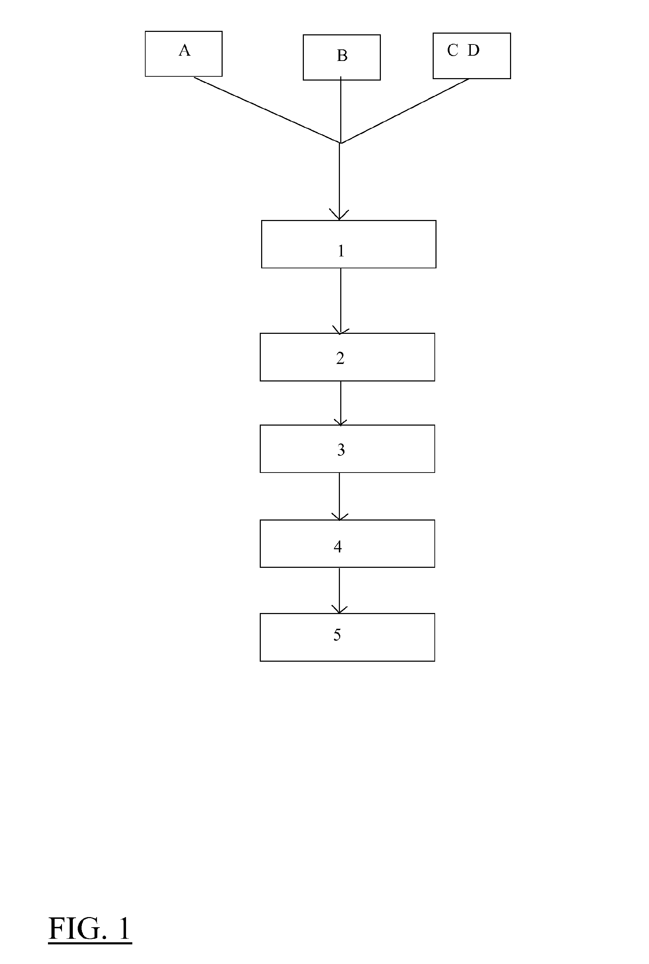

Un exemple de réalisation de l'invention est décrit dans ce qui suit en lien avec la Fig. 1. Cet exemple se veut illustratif et non limitatif.

La Fig. 1 représente de manière schématique un procédé selon un mode de réalisation de l'invention.

### Exemple 1 : Les composants ci-dessous sont mélangés:

- matière grasse végétale (A) : 27 %
- eau (B) : 57 %
- alginate de sodium (gélifiant) (C): 4 %
- autres (D): sucre, fibres végétales, arôme, acidifiant, colorant.

Le mélange est homogénéisé dans un cutter horizontal (1), ou vertical, dont les lames tournent à 1500 T/min, jusqu'à obtention d'une pâte fine. Il est refroidi par ajout de CO₂ pour obtenir une température en fin de cuttérage proche de 0°C. La pâte obtenue est ensuite extrudée (2) à l'aide d'un poussoir sous vide équipé d'une filière d'extrusion rectangulaire de 1,4 mm d'épaisseur et 35 mm de large, en une bande fine continue. La bande, à la sortie de l'extrudeuse, est trempée (3) dans une solution de chlorure de calcium à 5% (agent provoquant la gélification de l'alginate). La gélification est instantanée.

La bande est alors découpée à la longueur souhaitée (4).

Le substitut de barde obtenu peut être utilisé (5) par la suite dans un procédé classique de préparation d'une préparation bouchère ou charcutière, telle qu'un rôti. Un tel procédé comportera, en plus des étapes de préparation du substitut de barde selon l'exemple 1, la préparation du rôti selon tout procédé connu puis l'enveloppement du rôti par le substitut de barde. L'ensemble sera alors ficelé.

## Revendications

1. Procédé de fabrication de substituts de bardes **caractérisé en ce qu'**il comprend les étapes suivantes de:
- préparation d'un mélange comprenant de l'eau (B) et au moins un gélifiant (C) choisi parmi l'alginate et la pectine, avec ou sans matière grasse animale et/ou végétale (A), avec ou sans au moins un autre ingrédient à usage alimentaire (D),
- homogénéisation dudit mélange (2),
- extrusion du mélange en bande (3),
- gélification par mise en contact de la bande avec une solution contenant un agent provoquant la gélification de l'alginate ou de la pectine (4),
- éventuellement découpage (4) de ladite bande à la longueur souhaitée.

2. Procédé de fabrication de substituts de bardes selon la revendication 1, **caractérisé en ce que** ledit mélange comprend de la matière grasse végétale et/ou animale (A).

3. Procédé de fabrication de substituts de bardes selon l'une des revendications 1 à 2, **caractérisé en ce que** ledit gélifiant (C) est l'alginate, préférentiellement l'alginate de sodium ou de potassium.

4. Procédé de fabrication de substituts de bardes selon l'une des revendications précédentes, **caractérisé en ce que** ledit mélange comprend entre 0 et 40 % de matière grasse végétale et/ou animale (A) et entre 0,5 et 6 % de gélifiant (C), en poids par rapport au poids total du mélange.

5. Procédé de fabrication de substituts de bardes selon l'une des revendications précédentes, **caractérisé en ce que** ladite solution contenant un agent gélifiant de l'alginate ou de la pectine est une solution contenant un sel de calcium.

6. Procédé de fabrication de substituts de bardes selon la revendication 5, **caractérisé en ce que** ladite solution contenant un sel de calcium est le chlorure de calcium ou le lactate de calcium.

7. Procédé de fabrication de substituts de bardes selon la revendication 6, **caractérisé en ce que** ladite solution contient entre 1 et 15 %, préférentiellement entre 1 et 10 %, en poids, de sel de calcium.

8. Procédé de fabrication de substituts de bardes selon l'une des revendications précédentes, **caractérisé en ce que** ladite étape d'homogénéisation (1) est réalisée par cuttérage.

9. Procédé de fabrication de substituts de bardes selon l'une des revendications précédentes, **caractérisé en ce que** ladite étape d'extrusion (2) est réalisée en une bande d'épaisseur inférieure à 5 mm, plus préférentiellement inférieure ou égale à 3 mm, encore plus préférentiellement égale à 1,5 mm..

10. Procédé de fabrication de substituts de bardes selon l'une des revendications précédentes, **caractérisé en ce que** ladite étape de mise en contact (3) avec la solution contenant l'agent gélifiant a lieu en continu par trempage ou douchage de la bande dans ou à l'aide de ladite solution.

11. Procédé de fabrication de substituts de bardes selon l'une des revendications précédentes, **caractérisé en ce que** ledit, ou lesdits, autres ingrédients à usage alimentaire (D) sont choisis parmi les fibres végétales, les sucres, les émulsifiants, les acidifiants, les arômes, les colorants ou tout autre ingrédient ou additif convenant à un usage alimentaire.

12. Substitut de barde **caractérisé en ce qu'**il est obtenu par un procédé selon l'une des revendications 1 à 11.

13. Procédé de fabrication d'une préparation bouchère ou charcutière comprenant un substitut de barde, **caractérisé en ce qu'**il comprend les étapes de:
- élaboration d'une préparation bouchère ou charcutière,
- fabrication d'un substitut de barde selon le procédé selon l'une des revendications 1 à 11,
- assemblage dudit substitut de barde obtenu et de ladite préparation bouchère ou charcutière,
- éventuellement, ficelage.

14. Utilisation d'un substitut de barde obtenu par un procédé selon l'une des revendications 1 à 11 pour la fabrication d'une préparation bouchère ou charcutière, telle qu'une paupiette ou un rôti farci.
